# EUROPEAN PATENT SPECIFICATION

(11) **EP 3 161 894 B1**
(45) Date of publication and mention of the grant of the patent: **22.05.2019**
(21) Application number: 14747834.1
(22) Date of filing: 17.07.2014
(51) Int. Cl.: H01M 10/12, H01M 10/10, H01M 2/36, H01M 4/16

(54) **MANUFACTURING PROCESS FOR GEL BATTERIES AND APPARATUS THEREFOR**
HERSTELLUNGSVERFAHREN FÜR GELBATTERIEN UND VORRICHTUNG DAFÜR
PROCÉDÉ DE FABRICATION DE PILES SÈCHES ET APPAREIL CORRESPONDANT

(43) Date of publication of application: 03.05.2017
(73) Proprietor: ABERTAX RESEARCH AND DEVELOPMENT LTD., Paola, PLA 08 (MT)
(72) Inventor: CILIA, Joseph, 1054 Zebbug (MT); MERZ, Klaus-Dieter, 63654 Büdingen (DE)
(74) Representative: Diehl & Partner GbR
(86) International application number: PCT/EP2014/001959
(87) International publication number: WO 2016/008503

(56) References cited:
- EP-A1- 1 575 117
- CN-A- 102 394 318
- US-A- 6 120 929
- US-A1- 2005 084 762
- US-A1- 2006 068 294

## Description

The present invention relates to a manufacturing process for gel batteries and especially to a filling process for gel batteries by an acid-to-gel process, and to an apparatus for carrying out the process.

An electric battery consists of one or more electrochemical cells that convert chemical energy contained in the respective cell into electrical energy. Each cell contains a positive electrode called cathode and a negative electrode called anode and is filled with a chemical mixture called electrolyte.

The cells of the battery may be independent from one another or may be connected with one another in a way allowing a flow of electrolyte from one cell to another cell. Furthermore, several cells electronically may be connected in series with one another forming a block.

The electrodes may be plate-shaped or lattice-shaped, for example. In gel batteries the electrodes contain lead and may even be referred to as pole plates.

The electrolyte may be liquid or paste-like. In gel batteries the electrolyte is usually gelled sulfuric acid H₂SO₄. Gelling is usually achieved with an amount of silica, SiO₂, added to the sulfuric acid, H₂SO₄.

Gel batteries are so-called valve regulated batteries, which do not need any water refilling during the whole service life, see e.g. DE 36 03 196 A1. This type of lead-acid battery is used in a variation of applications, in particular in cycling operations..

As is known e.g. from DE 37 36 069 C2, batteries of this type initially need to be "*formed*"*,* i.e. the originally equivalent electrodes have to be polarized by a current flowing through them so as to acquire their natures as positive and negative electrodes, respectively. The forming e.g. transforms lead oxide into lead on the one kind of electrodes, and transforms lead oxide into lead dioxide on the other kind of electrodes.

There are several known methods for an initial filling and forming process of gel batteries:
1. The cells of the battery are assembled using pre-formed positive and negative electrodes, then the cells are filled with a gel, and electrochemically charged. The pre-formation of the electrodes takes place in separate tanks filled with acid
   This method is the oldest process and gives good quality products. A disadvantage is the high cost of tank formation, and the entire process is not particularly environmentally friendly.
2. Another method is the so-called "jar or block formation" with liquid acid acting as electrolyte. This method starts out from cells containing unformed electrodes, and liquid acid is circulated through the cells of the battery during formation. After the formation the battery is electrochemically discharged to a certain level, followed by drainage of the acid (usually by toppling the battery) and then re-filling with gel.
   The disadvantage of this method is the more complicated and costly process, and sometimes variations in cell performance occur.
3. A third method is the so-called "direct gel formation", so far the most economic and easiest process. In this process, the cells are assembled with unformed electrodes, gel is added, and then formation is started.
   However, direct gel formation takes a very long time and does not result in good quality product, as the acid concentration in the gel tends to vary widely during the formation.

EP 1 575 117 A1 discloses a maintenance-free accumulator comprising one or more cell containers having a respective plate block with positive and negative plate sets, wherein the plates of each plate set are electrically conductingly connected together and the cell containers are filled with a thixotropic gel electrolyte. The capacity per cell container of the accumulator is at least 6000 ampere-hours and the filling height of the cell containers with gel electrolyte from the bottom of the cell containers is at least 800 mm. The maintenance-free accumulator is produced by a process in which
a) cell containers with a respective plate block with positive and negative plate sets are provided, wherein the plates of each plate set are electrically conductingly connected together,
b) a filling pipe is provided for each cell container, the filling pipe projecting from above into the cell container and opening in the proximity of the bottom of the cell container and at a spacing therefrom, and
c) a thixotropic gel electrolyte is introduced through the filling pipe into the cell container to a filling height of at least 800 mm from the bottom of the cell container.

A gel electrolyte mixing machine where several parameters (e.g. temperature and composition) can be controlled to guarantee a constant quality of the gel electrolyte is disclosed by CN 102 394 318 A.

US 6,120,929 A discloses an apparatus suitable for filling electrolyte into a battery. In accordance with this document, a lid for accumulator batteries has one or more holes to receive a device to ensure the circulation of electrolyte during a first charge and a second device to ensure the re-fill of electrolyte during other charges. The lid is equipped with one or more channels each having one end facing the surface of the one or more holes and the opposite end coupled with at least one duct on an inner vertical wall of a container.

It is an object of the invention to provide a filling process of the "jar or block formation" broadly related to the above described method no. 2, however without the complicated acid drainage and re-filling process; and an apparatus for efficiently carrying out the process.

According to the invention this problem is resolved by a method as set forth in claim 1, and the apparatus as set forth in claim 7. Further advantageous aspects become evident from the dependent claims.
- Figure 1: shows an equipment that may be used for the new filling process which is hereafter described.
- Figure 2: shows an apparatus according to present invention.
- Figure 3: shows a filling plug of an apparatus according to present invention.
- Figure 4: shows a valve arrangement for an apparatus according to present invention.

At first the cells 10 of a lead-acid battery 12 are assembled using unformed lead electrodes and filled with a sulfuric acid of a specified density, followed by a formation process, such as the one described in DE 37 36 069 C2, and including acid circulation. After the formation, the cells 10 are discharged electrochemically to a certain level, or else remain fully charged. In either case, the cells are at that time filled essentially with the acid only.

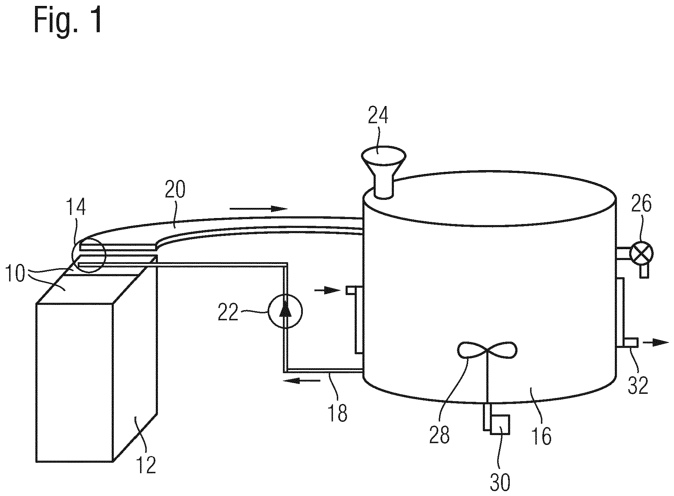

The following gel filling method can be applied to fully charged or to partially discharged ones:
Referring to Fig. 1, the top of the cells 10 of batteries 12 are fitted with a plug 14, which has an intake and an outlet duct. The corresponding hoses or tubes 18, 20 are connected with a mixing and filling gel container 16. Alternatively, in some applications the plugs previously employed for the acid circulation may remain in the cells, and instead the hoses are disconnected and other hoses for communicating to the container are connected to the plugs.

The container 16 is filled with a prepared gel mixture, i.e. the required acid (typically H₂SO₄) with an excess amount of the gelling agent, typically SiO₂. A pump system 22 pumps gel from the container 16 into the cells 10 of the battery 12 through the intake tube 18, while the outlet tube 20 transports the acid from top of the cell 10 back to the container 16. The additional acid received in the container from the cells in combination with the reduction of the amount of gel mixture in the container, the gel mixture containing an amount of SiO₂, results in a reduction of the total SiO₂ concentration in the container 16.

This acid/gel-exchange process is typically continued until the SiO₂ concentration is equal in the cells 10 and container 16. After this stage is reached, the filling process is discontinued, the filling plug is removed, and the battery sealed.

The container then may be restored to its original SiO₂ concentration by replenishing SiO₂, potentially appropriately reducing the amount of acid at the same time, for the next batch. The container therefore typically has an inlet opening 24 for adding SiO₂, and an outlet 26 for excess acid; it also typically has a stirrer 28 driven by a motor 30 for agitating the content so as to maintain the prepared gel mixture in a flowable state, i.e. to avoid premature gelling. The container may also have cooling means such as a cooling jacket 32 outside it (shown only in cross section in Fig. 1), and/or cooling pipes inside it, to enable adjusting the temperature of the prepared gel mixture. Naturally, there may also be means provided to measure the temperature of the gel and acid in the container 16. Additionally, there may be means provided for measuring the acidity of the gel and acid, and/or for adjusting the amount of acid.

Incidentally, the prepared gel mixture may be cooled (e.g. by 10°-30°C) so as to increase its density. Although the density of the gel is already somewhat larger than that of the acid alone, at the same temperature, cooling the prepared gel mixture is effective in accelerating the gel filling process. A typical initial SiO₂ concentration of the gel mixture in the container will be dependent on the desired final SiO₂ concentration of the gel in the filled battery; e.g., a reasonable range for the SiO₂ concentration in the container will be 50% or higher up to twice or up to three times as high as the desired concentration. The reason is that in each batch, a dilution will occur due to the acid flowing back from the formatted batteries. The extent of this dilution will naturally depend on the volume ratio of the batteries combined and the container, which may typically be on the order of 1-2.

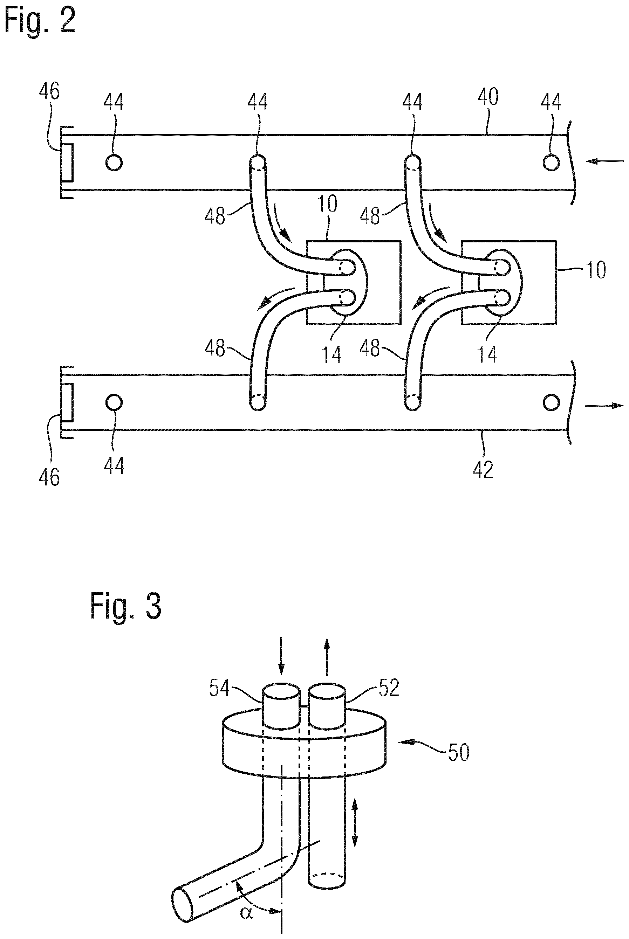

As shown with reference to Fig. 2, a particularly useful apparatus has two essentially parallel tubes 40, 42 for connecting cells of plural individual batteries (usually more than 10 and up to 50, such as a multiple of 12, e.g. 24 or 36 batteries). Each battery may comprise plural, e.g. six to twelve cells. The cells may be communicated with one another, allowing an exchange of gel and acid. One of the tubes 40 is connected to the outlet of the container 16, and the other 42 to its inlet. Both may be equipped with a valve; the same four-way valve may be used for both tubes. Each tube has as many closable outlet/inlets 44 as the maximum number of batteries envisioned to be filled at the same time. One of the tubes may have one extra closable opening per outlet/inlet to accommodate the plug for the respective battery when a smaller number of batteries is to be filled, than the maximum number, or when the apparatus is not in use, to seal the system from the environment. Both tubes may have plugs 46 at their far ends (as seen from the container, or valve if present). These plugs 46 may be replaced by additional tube lengths with outlets/inlets, to provide additional capacity for filling still more batteries simultaneously. Each plug 14 of a battery or cell 10 is connected to the parallel tubes 40, 42 by short interconnecting hoses 48.

In a further embodiment shown in Fig. 3, the filling plugs 50 have outlets 52 which are adjustable in height. This enables easy adjustment of the filling height, in the event the type of battery to be filled is changed between batches. Incidentally, the inlet tube 54 of the plugs in some embodiments is angled by an angle α of e.g. between 10° and 80°, or between 20° and 60°.

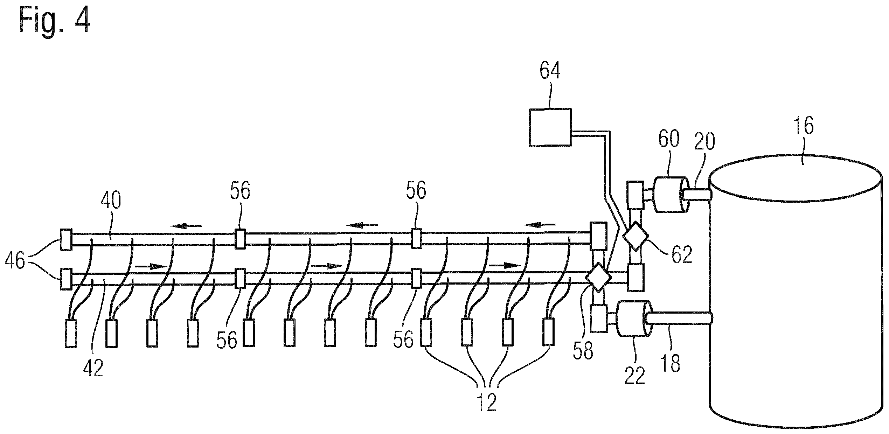

Fig. 4 shows an arrangement of two tubes 40 and 42 which have been extended to greater length using interconnectors 56. In this arrangement, both tubes 40 and 42 are communicated/discommunicated from the container 16 using a four-way-valve 58. Aside from the pump 22, in this embodiment there is another pump 60 in the outlet tube 20 leading back to the container 16. In the outlet tube branch, there is an additional sensor 62 (e.g. light sensor) operable to sense an increase in the gel concentration in the liquid flowing to the container, so as to enable a control unit 64 to terminate the filling process by closing the valve 58, when the gel starts flowing back to the container 16.

The new method reduces time and cost. The existing filling and formatting equipment can be adapted to the components and procedures of the invention. Only minor modifications to existing installations for gel battery production need to be done to introduce a cleaner production process.

The new production process for gel batteries leads to a reduction in production cost of up to 20%. This is achieved by a reduction in production time (as soon as the liquid is pumped out, gel will be pumped into the block housing) and a reduction in required machinery (no turning function of the block housing is needed).

The above exemplary description of embodiments is not to be construed as limiting the invention, the scope of which is defined by the appended claims.

## Claims

1. A process for manufacturing gel batteries containing:
providing at least one battery (12) having at least one cell (10);
loading each cell (10) of the battery (12) with two unformed electrodes;
filling each cell (10) of the battery (12) with a sulfuric acid of a specified density;
conducting a formation process to form positive and negative electrodes in the cells (10);
providing a gel mixing and filling container (16) filled with a prepared gel mixture, the gel mixture containing sulfuric acid and an amount of silica;
fitting a plug (14) to the top of at least one cell (10) of the battery (12), the plug (14) having an inlet hose and an outlet hose;
connecting the plug (14) to the gel mixing and filling container (16) through an intake tube (18) and an outlet tube (20); and
pumping the gel mixture from the container (16) through the intake tube (18) and the inlet hose of the plug (14) into the cell (10), the outlet tube (20) transporting the sulfuric acid from the top of the cell (10) through the outlet hose of the plug (14) back to the container (16).

2. The process of claim 1, wherein the step of conducting a formation process comprises:
applying current to the electrodes; and
circulating sulfuric acid between a container containing the sulfuric acid and the cells (10) using a pump.

3. The process of claim 1 or 2, wherein the step of fitting a plug (14) to the top of at least one cell (10) of the battery (12) is performed after the step of loading each cell (10) of the battery (12) with two unformed electrodes and before the step of conducting a formation process.

4. The process according to claim 1, wherein the step of fitting a plug (14) to the top of at least one cell (10) of the battery (12) is performed after the step of conducting a formation process.

5. The process according to one of claims 1 to 4, wherein the step of pumping the gel mixture from the container (16) through the intake tube (18) and the inlet hose of the plug (14) into the cell (10) is performed until the silica concentration in the at least one cell (10) is equal to the silica concentration in the container (16).

6. The process according one of claims 1 to 5, further comprising at least one of:
measuring and regulating the temperature of the gel mixture in the container (16) to a predetermined temperature before and/or during the step of pumping the gel mixture from the container (16) through the intake tube (18) and the inlet hose of the plug (14) into the cell (10); and
measuring the acidity of the gel mixture in said container (16) before and during the step of pumping the gel mixture from the container (16) through the intake tube (18) and the inlet hose of the plug (14) into the cell (10).

7. An apparatus for the filling of gel batteries with a prepared gel mixture, the apparatus comprising:
a container holding the prepared gel mixture;
an intake tube (18) and an outlet tube (20) connected to the container (16); and
a plug (14) connected to the inlet and outlet tubes (18, 20), for fitting to the top of each battery cell (10),
wherein the plug (14) is equipped with at least one an inlet hose which is angled inside the cell (10), wherein the angling of the inlet hose changes the flow direction of the gel mixture by 10°-80° or by 20°-60° and wherein the inlet hose and the outlet hose are arranged side by side or coaxially when transecting the plug; and
wherein the intake tube (18) and the outlet tube (20) are essentially parallel, and are each provided with a number of closable openings for connecting thereto the plugs (14) of plural gel batteries to be filled.

8. The apparatus according to claim 7, further comprising at least one valve for selectably communicating the intake and outlet tubes (18, 20) to the container (16) respectively selectably discommunicating the intake and outlet tubes (18, 20 from the container (16).

9. The apparatus according to claim 8, comprising a four-way valve for selectably communicating the intake and outlet tubes (18, 20) to the container (16) respectively for selectably discommunicating the intake and outlet tubes (18, 20 from the container (16).

10. The apparatus according to one of claims 7 to 9, wherein the intake and outlet tubes (18, 20) each have plugs at their far ends, the plugs replaceable by another tube length for increasing the filling capacity.

11. The apparatus according to one of claims 7 to 10, wherein the container (16) is equipped with at least one of a temperature sensor for measuring the temperature of the gel mixture contained in the container (16) and a heating/cooling device for regulating the temperature of the gel mixture contained in the container (16).

12. The apparatus according to claim 11, comprising at least one of a cooling jacket outside the container (16) and cooling pipes inside the container (16).

13. The apparatus according to one of claims 7 to 12, wherein the container (16) is equipped with at least one of
means for measuring the acidity of the gel mixture contained in the container and
means for regulating the acidity of the gel mixture contained in the container and
a stirrer for preparing the gel mixture by mixing sulfuric acid and silica, and/or for maintaining the gel mixture in a flowable state or bringing it into a flowable state.

14. The apparatus according to claim 13, wherein the container (16) comprises at least one of means for replenishing with a gelling agent such as SiO₂, and means for adjusting the amount of acid in the container (16).

15. The apparatus according to one of claims 7 to 14, wherein the plug (14) is equipped with at least one outlet hose of adjustable length inside the cell (10).

## Patentansprüche

1. Verfahren zum Herstellen von Gelbatterien, aufweisend:
Bereitstellen wenigstens einer Batterie (12) mit wenigstens einer Zelle (10);
Beladen jeder Zelle (10) der Batterie (12) mit zwei unformierten Elektroden;
Befüllen jeder Zelle (10) der Batterie (12) mit Schwefelsäure einer vorgegebenen Dichte;
Durchführen eines Formiervorganges, um in den Zellen (10) positive und negative Elektroden zu bilden;
Bereitstellen eines mit einer vorbereiteten Gelmischung gefüllten Gelmisch- und Befüll-Behälters (16), wobei die Gelmischung Schwefelsäure und einen Zuschlag Siliciumdioxid enthält;
Anbringen eines Stöpsels (14) an der Oberseite wenigstens einer Zelle (10) der Batterie (12), wobei der Stöpsel einen Einlassschlauch und einen Auslassschlauch aufweist;
Verbinden des Stöpsels (14) über eine Einlassleitung (18) und eine Auslassleitung (20) mit dem Gelmisch- und Befüll-Behälter (16); und
Pumpen der Gelmischung aus dem Behälter (16) über die Einlassleitung (18) und den Einlassschlauch des Stöpsels (14) in die Zelle (10), wobei die Auslassleitung (20) die Schwefelsäure von der Oberseite der Zelle (10) über den Auslassschlauch des Stöpsels (14) zurück zum Behälter (16) führt.

2. Verfahren nach Anspruch 1, wobei der Schritt des Durchführens eines Formiervorganges aufweist:
Anlege von Stroms an die Elektroden; und
Zirkulieren der Schwefelsäure zwischen einem die Schwefelsäure enthaltenen Behältnis und den Zellen (10) unter Verwendung einer Pumpe.

3. Verfahren nach Anspruch 1 oder 2, wobei der Schritt des Anbringens eines Stöpsels (14) an der Oberseite wenigstens einer Zelle (10) der Batterie (12) nach dem Schritt des Beladens jeder Zelle (10) der Batterie (12) mit zwei unformierten Elektroden und vor dem Schritt des Durchführens eines Formiervorganges durchgeführt wird.

4. Verfahren nach Anspruch 1, wobei der Schritt des Anbringens eines Stöpsels (14) an der Oberseite wenigstens einer Zelle (10) der Batterie (12) nach dem Schritt des Durchführens eines Formiervorganges durchgeführt wird.

5. Verfahren nach einem der Ansprüche 1 bis 4, wobei der Schritt des Pumpens der Gelmischung aus dem Behälter (16) über die Einlassleitung (18) und den Einlassschlauch des Stöpsels (14) in die Zelle (10) durchgeführt wird, bis die Siliciumdioxid-Konzentration in der wenigstens einen Zelle (10) gleich der Siliciumdioxid-Konzentration im Behälter (16) ist.

6. Verfahren nach einem der Ansprüche 1 bis 5, weiter aufweisend wenigstens eines von:
Messen und Regulieren der Temperatur der in dem Behälter (16) enthaltenen Gelmischung auf eine vorgegebene Temperatur vor und/oder während des Schritts des Pumpens der Gelmischung aus dem Behälter (16) über die Einlassleitung (18) und den Einlassschlauch des Stöpsels (14) in die Zelle (10); und
Messen des Säuregehaltes der in dem Behälter (16) enthaltenen Gelmischung vor und während des Schritts des Pumpens der Gelmischung aus dem Behälter (16) über die Einlassleitung (18) und den Einlassschlauch des Stöpsels (14) in die Zelle (10).

7. Vorrichtung zum Befüllen von Gelbatterien mit einer vorbereiteten Gelmischung, die Vorrichtung aufweisend:
einen Behälter, welcher die vorbereitete Gelmischung enthält;
eine Einlassleitung (18) und eine Auslassleitung (20), die mit dem Behälter (16) verbunden sind; und
einen mit der Einlass- und Auslassleitung (18, 20) verbundenen Stöpsel (14), um an der Oberseite jeder Batterie-Zelle (10) angebracht zu werden,
wobei der Stöpsel wenigstens einen Einlassschlauch aufweist, der im Inneren der Zelle (10) abgewinkelt ist, wobei die Abwinkelung des Einlassschlauches die Fließrichtung der Gelmischung um 10° bis 80° oder um 20° bis 60° ändert, wobei der Einlassschlauch und der Auslassschlauch beim Durchdringen des Stöpsels seite-an-seite oder koaxial angeordnet sind; und
wobei die Einlassleitung (18) und die Auslassleitung (20) im Wesentlichen parallel verlaufen und jeweils mit einer Anzahl verschließbarer Öffnungen versehen sind, um mit den Stöpseln (14) zu befüllender Gelbatterien verbunden zu werden.

8. Vorrichtung nach Anspruch 7, weiter aufweisend wenigstens ein Ventil, um die Einlass- und Auslass-Leitung (18, 20) wahlweisen mit dem Behälter (16) zu verbinden bzw. um die Einlass- und Auslass-Leitung (18, 20) wahlweise von dem Behälter (16) abzusperren.

9. Vorrichtung nach Anspruch 8, aufweisend ein Vier-Wege-Ventil um die Einlass- und Auslass-Leitung (18, 20) wahlweise mit dem Behälter (16) zu verbinden bzw. um die Einlass- und Auslass-Leitung (18, 20) wahlweise von dem Behälter (16) abzusperren.

10. Vorrichtung nach einem der Ansprüche 7 bis 9, wobei die Einlass- und Auslass-Leitungen (18, 20) an ihren freien Enden jeweils Stöpsel aufweisen, wobei die Stöpsel zum Erhöhen der Befüllungs-Kapazität durch eine weitere Leitungslänge austauschbar sind.

11. Vorrichtung nach einem der Ansprüche 7 bis 10, wobei der Behälter (16) mit wenigstens einem von einem Temperatursensor zum Messen der Temperatur der in dem Behälter (16) enthaltenen Gelmischung und/oder einer Heitz/Kühleinrichtung zum Regulieren der Temperatur der in dem Behälter (16) enthaltenen Gelmischung ausgestattet ist.

12. Vorrichtung nach Anspruch 11, aufweisend wenigstens eines von einem Kühlmantel außerhalb des Behälters (16) oder Kühlleitungen innerhalb des Behälters (16).

13. Vorrichtung nach einem der Ansprüche 7 bis 12, wobei der Behälter (16) wenigstens eines der folgenden Mittel aufweist
Mittel zum Messen des Säuregehaltes der in dem Behälter enthaltenen Gelmischung; und
Mittel zum Regulieren des Säuregehaltes der in dem Behälter enthaltenen Gelmischung; und
einen Mischer zum Herstellen der Gelmischung durch Vermischen von Schwefelsäure und Siliciumdioxid und/oder um die Gelmischung in einem fließfähigen Zustand zu halten oder in einen fließfähigen Zustand zu bringen.

14. Vorrichtung nach Anspruch 13, wobei der Behälter (16) wenigstens eines von Mittel zum Auffüllen mit einem Geliermittel wie beispielsweise SiO₂ und Mittel zum Anpassen der Menge an Säure in dem Behälter (16) aufweist.

15. Vorrichtung nach einem der Ansprüche 7 bis 14, wobei der Stöpsel (14) wenigstens eine Auslassschlauch aufweist, dessen Länge im Inneren der Zelle (10) anpassbar ist.

## Revendications

1. Procédé pour fabriquer des batteries à gel contenant:
fournir au moins une batterie (12) ayant au moins une cellule (10);
charger chaque cellule (10) de la batterie (12) avec deux électrodes non formées;
remplir chaque cellule (10) de la batterie (12) avec un acide sulfurique d'une densité spécifiée;
conduire un procédé de formation pour former des électrodes positives et négatives dans les cellules (10);
fournir un récipient de mélange et de remplissage de gel (16) rempli avec un mélange gélifié préparé, le mélange gélifié contenant de l'acide sulfurique et une quantité de silice;
monter un bouchon (14) sur le dessus d'au moins une cellule (10) de la batterie (12), le bouchon (14) ayant un tuyau d'entrée et un tuyau de sortie;
raccorder le bouchon (14) au récipient de mélange et de remplissage de gel (16) par l'intermédiaire d'un tube d'admission (18) et un tube de sortie (20); et
pomper le mélange gélifié à partir du récipient (16) à travers le tube d'admission (18) et le tuyau d'entrée du bouchon (14) dans la cellule (10), le tube de sortie (20) transportant l'acide sulfurique depuis le dessus de la cellule (10) à travers le tuyau de sortie du bouchon (14) pour retourner au récipient (16).

2. Procédé selon la revendication 1, dans lequel l'étape de conduire un procédé de formation comprend:
appliquer un courant aux électrodes; et
faire circuler de l'acide sulfurique entre un récipient contenant l'acide sulfurique et les cellules (10) en utilisant une pompe.

3. Procédé selon la revendication 1 ou 2, dans lequel l'étape de monter un bouchon (10) sur le dessus d'au moins une cellule (10) de la batterie (12) est réalisée après l'étape de charger chaque cellule (10) de la batterie (12) avec deux électrodes non formées et avant l'étape de conduire un procédé de formation.

4. Procédé selon la revendication 1, dans lequel l'étape de monter un bouchon (14) sur le dessus d'au moins une cellule (10) de la batterie (12) est réalisée après l'étape de conduire un procédé de formation.

5. Procédé selon l'une des revendications 1 à 4, dans lequel l'étape de pomper le mélange gélifié à partir du récipient (16) à travers le tube d'admission (18) et le tuyau d'entrée du bouchon (14) dans la cellule (10) est réalisée jusqu'à ce que la concentration de silice dans la au moins une cellule (10) soit égale à la concentration de silice dans le récipient (16).

6. Procédé selon l'une des revendications 1 à 5, comprenant au moins une étape parmi:
mesurer et réguler la température du mélange gélifié dans le récipient (16) jusqu'à une température prédéterminée avant et/ou pendant l'étape de pomper le mélange gélifié à partir du récipient (16) à travers le tube d'admission (18) et le tuyau d'entrée du bouchon (14) dans la cellule (10); et
mesurer l'acidité du mélange gélifié dans ledit récipient (16) avant et pendant l'étape de pomper le mélange gélifié à partir du récipient (16) à travers le tube d'admission (18) et le tuyau d'entrée du bouchon (14) dans la cellule (10).

7. Appareil pour le remplissage de batteries à gel avec un mélange gélifié préparé, l'appareil comprenant:
un récipient contenant le mélange gélifié préparé;
un tube d'admission (18) et un tube de sortie (20) relié au récipient (16); et
un bouchon (14) relié aux tubes d'entrée et de sortie (18, 20), pour un montage sur le dessus de chaque cellule de batterie (10),
dans lequel le bouchon (14) est équipé d'au moins un tuyau d'entrée qui est incliné à l'intérieur de la cellule (10), dans lequel l'inclinaison du tuyau d'entrée fait varier la direction d'écoulement du mélange gélifié de 10 à 80° ou de 20 à 60° et dans lequel le tuyau d'entrée et le tuyau de sortie sont agencés côte à côte ou coaxialement en sectionnant le bouchon; et
dans lequel le tube d'admission (18) et le tube de sortie (20) sont sensiblement parallèles, et sont chacun pourvus d'un ensemble d'ouvertures fermables pour raccorder à celles-ci les bouchons (14) de la pluralité de batteries à gel devant être remplies.

8. Appareil selon la revendication 7, comprenant en outre au moins une vanne pour établir une communication de manière sélectionnable entre les tubes d'admission et de sortie (18, 20) et le récipient (16) respectivement pour rompre la communication de manière sélectionnable entre les tubes d'admission et de sortie (18, 20) et le récipient (16).

9. Appareil selon la revendication 8, comprenant une vanne à quatre voies pour établir une communication de manière sélectionnable entre les tubes d'admission et de sortie (18, 20) et le récipient (16) respectivement pour rompre la communication de manière sélectionnable entre les tubes d'admission et de sortie (18, 20) et le récipient (16).

10. Appareil selon l'une des revendications 7 à 9, dans lequel les tubes d'admission et de sortie (18, 20) ont chacun des bouchons sur leurs extrémités lointaines, les bouchons pouvant être remplacés par une autre longueur de tube pour augmenter la capacité de remplissage.

11. Appareil selon l'une des revendications 7 à 10, dans lequel le récipient (16) est équipé d'au moins un parmi un capteur de température pour mesurer la température du mélange gélifié contenu dans le récipient (16) et un dispositif de chauffage/refroidissement pour réguler la température du mélange gélifié contenu dans le récipient (16).

12. Appareil selon la revendication 11, comprenant au moins un parmi une chemise de refroidissement à l'extérieur du récipient (16) et des tuyaux de refroidissement à l'intérieur du récipient (16).

13. Appareil selon l'une des revendications 7 à 12, dans lequel le récipient (16) est équipé d'au moins un parmi
des moyens pour mesurer l'acidité du mélange gélifié contenu dans le récipient et
des moyens pour réguler l'acidité du mélange gélifié contenu dans le récipient et
un agitateur pour préparer le mélange gélifié en mélangeant de l'acide sulfurique et de la silice, et/ou pour maintenir le mélange gélifié dans un état fluable ou l'amener à un état fluable.

14. Appareil selon la revendication 13, dans lequel le récipient (16) comprend au moins un parmi des moyens pour faire le plein avec un agent gélifiant tel que SiO₂, et des moyens pour ajuster la quantité d'acide dans le récipient (16).

15. Appareil selon l'une des revendications 7 à 14, dans lequel le bouchon (14) est équipé d'au moins un tuyau de sortie de longueur réglable à l'intérieur de la cellule (10).
